(19) Europäisches Patentamt

European Patent Office

Office européen des brevets

(11) **EP 1 972 922 A1**

(12) # EUROPEAN PATENT APPLICATION

(43) Date of publication:
**24.09.2008 Bulletin 2008/39**

(51) Int Cl.:
***G01N 21/03*** *(2006.01)*

(21) Application number: **07425172.9**

(22) Date of filing: **22.03.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **S.I.T. S.r.l.**
**56127 Pisa (IT)**

(72) Inventors:
• **D'Amato, Francesco**
**56127 Pisa (IT)**
• **Clot, Paolo Rosa**
**56127 Pisa (IT)**
• **Clot, Marco Rosa**
**56127 Pisa (IT)**
• **Chiarugi, Antonio**
**56127 Pisa (IT)**
• **Carrara, Sandro**
**56127 Pisa (IT)**

(54) **Variable length herriott-type multipass cell**

(57) A Herriott cell is typically formed with two mirrors reflecting tens of times an incident laser beam before letting it out of the cell.

This patent presents an Herriott cell where the optical path can be varied at will, within a range of possible configurations. Thanks to its particular functional scheme, the path can range from a few meters to some tens of meters allowing a single cell to be configured as needed, performing like several Herriott cells.

Picture 5

EP 1 972 922 A1

**Description**

**State of the Art:**

Since 1990s many industrial inventions in laser systems for gas monitoring, have turned to Herriott cells. To improve the first 1990 patent [1], several technologies have been proposed, providing for the use of a multipass cell to multiply laser radiation in the volume of the gas sample. For example, a variant of the Herriott cell with a non-planar configuration was proposed in 1992 [2]. In this case, the Herriott cell's cylindrical tube is subdivided into 12 segments, each one containing a different reflecting mirror. The goal of this configuration was to augment the optical path of the cell. Cells with various geometries have been proposed with analogous objectives [3,4]. These are works referring to inventions related to a multipass cell made by a "plurality" of mirrors, arranged in such a way to form a polygonal (octagonal) path. These devices are applied in the search of impurities in gas mixtures.

Other inventions refer to Herriott cells without proposing any variant, but simply proposing a specific application. To this group belongs, for example, a rather recent patent (2000) related to a system for the measurement *in situ* of gas in exhaust stacks [5]. This patent employs Herriott cells and describes their functioning, but does not suggest any significant modification. Analogously, it is possible to find patents considering the use of Herriott cells in laser systems for gas measurement in high temperature applications [6], in portable systems to allow, if needed, measurement in fluorescence [7], and in applications in the processing of semiconductors [8]. In spite of all this work, no industrial invention of the last 15 years ever confronted with technological problems of great industrial relevance.

All these technologies employ Herriott cells in applications needing different optimal optical paths. However, once built, a Herriott cell can provide only one optical path, fixed once and for all, and determined by the cell's mirror position. Therefore, to meet the needs and the exigencies of every single application (every application needs specific and different optical paths) Herriott cells manufacturers are forced to build cells with different optical paths. None of the existing patents in international literature-including 40 Japanese national patents-consider the possibility of building Herriott cells with variable configurations to allow specific settings within the same cell. In other words, in the international literature a cell with variable configuration to allow configuration with several optical paths has never been proposed.

The purpose of the present industrial invention is to present a Herriott cell with variable configuration, allowing several optical paths within the same cell. In particular, in the proposed cell it is possible to place one of the cell's two mirrors within a 6 mm excursion only (an excursion compatible with the mechanics of the cell), and, therefore, to obtain several different optical paths within the same cell. This patent describes the different configurations to obtain 1-22-48-70 passes, corresponding to 0-21-47-69 reflections within the cell, and, therefore, obtaining optical paths of approximately 0.5-9-19.5-28.5 meters, by using a 50 cm single cell. Obviously, such configurations are just examples, and it is possible to obtain an optical path of any length, by varying the length of the cell and the number of reflections within an excursion compatible with the cell's mechanics.

**Invention description:**

The goal of the cell type in exam is to eliminate a limitation in the multipass cell of the Herriott type [9], that is their impossibility of varying the optical path.

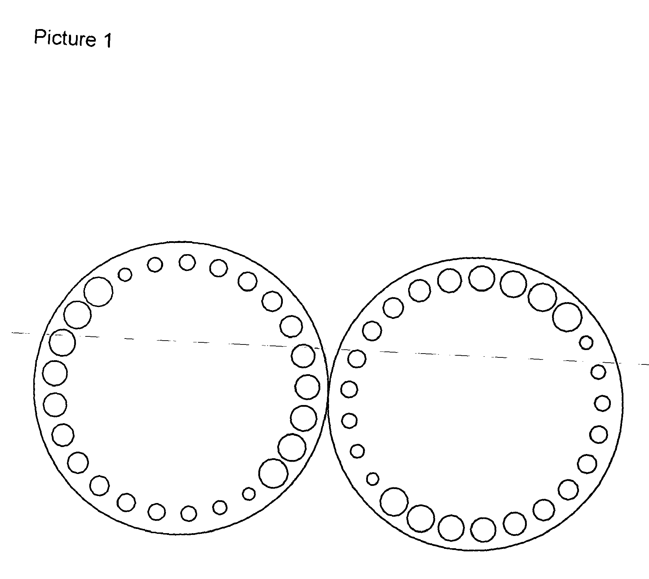

In a Herriott cell, the number of passages depends on the mirrors' bend radius and distance. Drawing 1 represents the reflections development on the two mirrors of a Herriott cell. The big circle on the left is the back view of the mirror with the input/output hole. The big circle on the right is the front view of the bottom mirror. With every reflection the beam weakens. This effect is visualised with the reduction of the dots' diameter.

In this configuration, by changing the mirrors' position the number of passes can change in steps of 4 passes starting from 2 passes. Therefore, in the case of drawing 1, it is possible to switch from 50-to 54, or 46, etc.

Clearly, this process cannot be identified with a real length tunability of the optical path. Several steps are needed to obtain noticeable variations (i.e. 30% or 200% of the initial path). This is impossible, because the variation in the distance between the mirrors would result in incompatible values with the cell's mechanics, while the input/output angles would accordingly be modified in such a way to constantly require a complete realignment of the experimental apparatus.

In the configuration in drawing 1, the beam exits because, after completely running through, it finds again the input hole from which it entered. In practice, every intercept on a mirror is angularly shifted with respect to the previous one.

$$\Delta \varphi = 2\pi \frac{(n-2N)}{4} \frac{2}{n} \qquad (1)$$

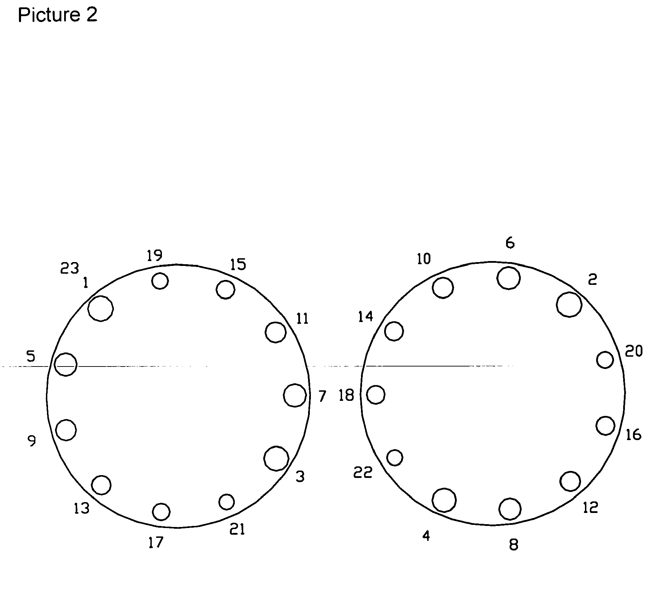

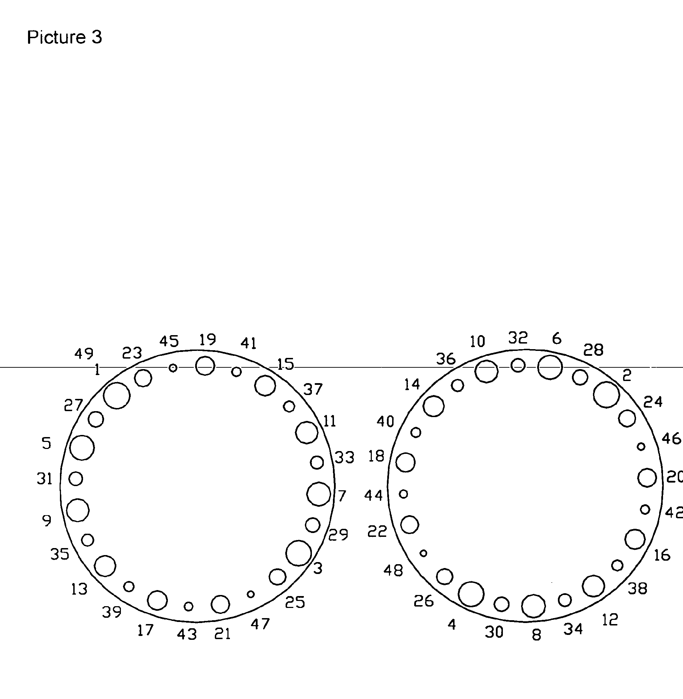

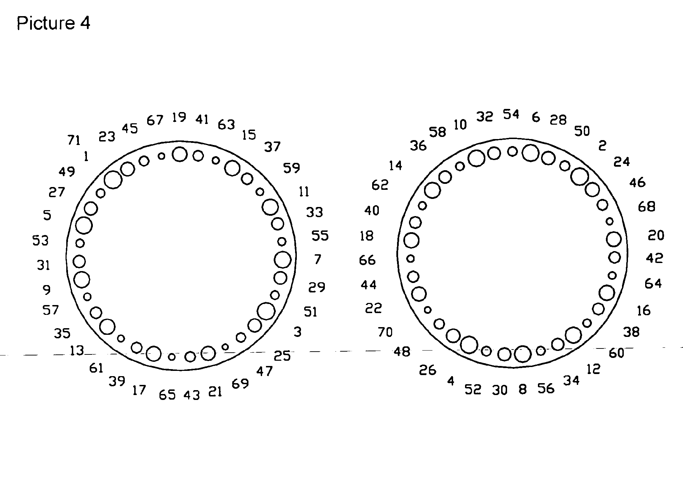

In (1), $n$ is the number of passes in the cell, and $N$ the number of circles run onto the mirror. Drawing 2 shows a situation with just one circles, for 22 steps, with 11 intercepts per mirror. The drawing represents the proceeding of the reflections in a one round case. Every dot is identified, in addition to the attenuation effect-represented by the reducing diameter-, with the number of the intercept between beam and mirror. The beam entrance into the cell is individuated with intercept 1, while the exit with number 23. In the drawing it can be observed that, once completed the two semicircunferences on each mirror, the beam exits the cell. If the beam is prevented from exiting, it is possible to make it cover another round. Thus, we are now in the situation represented in Drawing 3. This drawing describes the reflections behaviour in a two-rounds case. Now, a second round is covered, and if at the end of the round the beam is forced to bounce once more on the mirror (not hit the output hole), a third round can be covered. This is the case in Drawing 4, representing the process in a three-rounds case.

Again, once the mirrors' bend radius has been fixed, the distance between the mirrors is the parameter forcing the beam to cover a given number of rounds. In this case, however, the jump between a configuration and the following one is not of four passes, but 26 or 22. In practice, in the three configurations here described, the optical path length L has a progression of the type L, 2.2L, and 3.2L. We proceed to investigating the differences of the needed distances between mirrors. Assuming that the mirrors' bend radius is 470.4 mm, the three configurations requires the following distances: 403.46 mm., 409.00mm., 407.26 mm (Tab. I).

Practically, this means that the optical path can be significantly changed with a 5.54mm excursion of one mirror only.

It can be added that the dynamic of the system can be further enhanced with mirrors having a holes in their centres, thus allowing a single passage along the cell axis.

Tab. I

| Distance (mm) | Rounds | Steps | Length (meters) |
|---|---|---|---|
| 403.4551 | 1 | 22 | 8.88 |
| 407.25667 | 3 | 70 | 28.51 |
| 409.00047 | 2 | 48 | 19.63 |

It is now necessary to verify the mechanical and optical problems of this solution.

Optical problems are the maintenance both of the entrance point into the cell and of the input direction. In every case the input beam is horizontal. Input coordinates and the horizontal plan angle are shown in tab. II.

Tab. II

| Rounds | X (mm) | Y (mm) | Angle (°) |
|---|---|---|---|
| 1 | 15.06 | 17.38 | 4.27 |
| 2 | 15.16 | 17.29 | 4.24 |
| 3 | 15.13 | 17.32 | 4.25 |

The largest difference between the entrance spots is 13.5 hundredths of a mm.; the greatest angular deviation is lower than 2'. These values are largely within aligning tolerances. This is extremely important, for it means that to change from a configuration to another, is sufficient to reallocate the bottom mirror, leaving unvaried the situation at the other end of the cell, regarding both the mirror position and the alignment of the initial beam. It is not wise to move the entrance mirror, for the beam would loose its alignment with the hole, thus requiring a complete realignment.

Although there are other possibilities, such as configurations with 1-2-3-5 rounds, the maximum excursion of the bottom mirror would reach impracticable values around 15 mm.

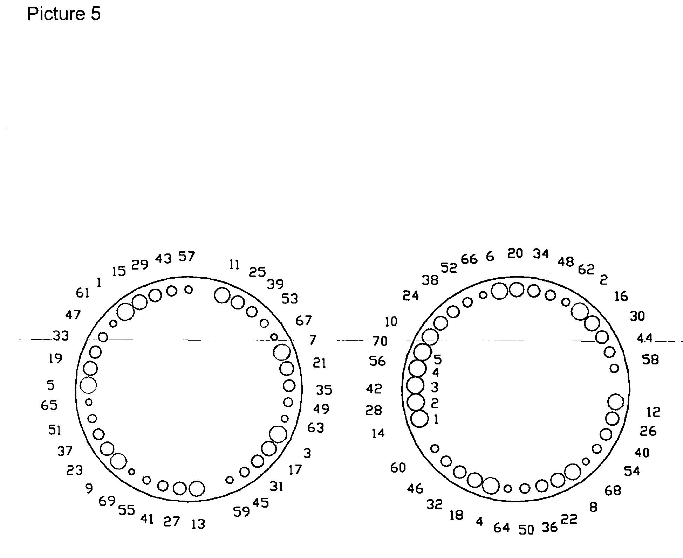

An alternative possibility consists in fixing the alignment (for example, to 5 rounds-but any number of round can be chosen). The beam exits through a hole in the bottom mirror. The latter does not translate but can rotate on its axis. Therefore, maintaining the same distance between mirrors, the beam can effect 13, 27, 41, 55, 69, or 73 passages, according to the position of the output hole. This configuration is described in drawing 5. The drawing illustrates a several-rounds configuration with rotation of the bottom mirror. Only the first 70 intercepts of the beam on the mirrors (that is, 69 passages) are shown. 73 passages can be obtained by shifting the hole on the bottom mirror in the intermediate position between spot n. 14 and spot n. 60.

Note, once again, that the numbers outside the mirrors represent the number of the intercept of the beam with the mirror.

It is evident that in this configuration, (the position of the output spot varies of about 24 mm since it depends to the 23 mm radius of the intercept circle) the optics at the cell output must be adapted to the chosen configuration. In this case, too, it is possible to have a single passage by means of a hole on each mirror, in a region not interested to the "normal" operation of the cell.

## Expected benefits of the industrial invention:

This industrial invention presents for the first time a system for building a configurable Herriott cell, with the possibility of realizing several optical paths within the same cell.

Furthermore, compared with current technologies the system described in this patent offers the following advantages:

- It allows the construction of a single cell with variable configuration.
- It allows the construction of a single cell, but the sale of several cells with different optical paths.
- It allows the construction of a single cell, corresponding to different commercial products.
- It allows the organization in a single production line for the building of different Herriott cells.
- It allows the realization of Gas measuring systems wherever it is possible to optimize the optical path within the sample to be measured, as a function of the characteristics of the sample itself.
- It allows the realization of a single system for measuring Gases. In order to adapt to different applications, the system can be easily configured by means of different optimizations of the optical path within the sample to be investigated.

## references:

[1] American patent n. 4,953,976: **Gas species monitor system.**
[2] American patent n. 5,173,749: **Method and apparatus for spectroscopic measurement of the concentration of a gas**
[3] American patent n. 5,818,578: **Polygonal planar multipass cell, system and apparatus including same, and method of use**
[4] PCT patent (international) n. WO9715817: **Multipass Cell end Analysis Method**
[5] American patent n. 6,064,488: **Method and apparatus for in situ gas concentration measurement.**
[6] PCT patent (international) n. WO9749983: **Apparatus end Method for Measuring Gases using an Athermal Optical Multipass Cell.**
[7] American patent n. 6,344,648: **System for detection and measurement of one or several gases in a gas mix**
[8] American patent n. 6,188,475: **In-line cell for absorption spectroscopy**
[9] D.R. Herriott, H.J. Schulte: Folded optical delay lines, Appl. Opt. 4, p. 883-889 (1965)

## Claims

1. A Herriott-type cell including a system for configuring different optical paths within it.

2. A Herriott-type cell as per claim #1, where the system for configuring different optical paths is realized by shifting some mechanical parts of the cell.

3. A Herriott-type cell as per claim #2, where the movable mechanical parts are such thanks to a suitable mechanism.

4. A Herriott-type cell as per claim #3, where the suitable mechanism is realized through a screw, ore several screws, allowing the movement by their rotation.

5. A Herriott-type cell as per claim #3, where the movable mechanical part consists in the mirror opposed to the input one, and can translate by the means of a suitable mechanism.

6. A Herriott-type cell as per claim #5, where both mirrors have a supplementary hole, of any shape, in addition to those necessary to the normal operation of the cell.

7. A Herriott-type cell as per claim #5, where, varying the distance between the mirrors, the beam in the cell draws one, two, or several series of spots as was described (the reported example has no limitation of sort in the number of executable series).

**8.** A Herriott-type cell as per claim #5, with the mirror with the output hole (opposed to the input mirror), aligned in such a way that the beam will draw N series of spots on the mirrors (as per drawing #5), and with the output mirror having the degree of freedom of the rotation around its axis, by means of a suitable mechanism,-. This is designed in order to extract the beam from the cell after 1, 2, ..., N series of spots, (the example in drawing #5 has no limitation of sort in the value of N).

Picture 1

Picture 2

Picture 3

Picture 4

Picture 5

**European Patent Office**

**EUROPEAN SEARCH REPORT**

Application Number

EP 07 42 5172

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 621 867 A (SOUTHWEST SCIENCES INC [US]) 1 February 2006 (2006-02-01) * figures 1,11; examples 1-3 * * paragraph [0014] - paragraph [0022] * * paragraph [0034] * * paragraph [0087] * * paragraph [0113] * | 1-8 | INV. G01N21/03 |
| D,X | WO 97/49983 A (BOVAR ENGINEERING PRODUCTS [CA]; FRISH MICHAEL B [CA]) 31 December 1997 (1997-12-31) * page 6, line 8 - line 17; figure 1 * | 1-5,7 | |
| A | WO 2004/023114 A (TDW DELAWARE INC [US]; BOUNAIX FABRICE MARCEL S [FR]) 18 March 2004 (2004-03-18) * figure 9 * * page 12, line 9 - line 20 * * page 15, line 17 - line 26 * | 1-8 | |
| | | | TECHNICAL FIELDS SEARCHED (IPC) G01N |

The present search report has been drawn up for all claims

| Place of search | Date of completion of the search | Examiner |
|---|---|---|
| The Hague | 23 August 2007 | Bockstahl, Frédéric |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**EP 1 972 922 A1**

## ANNEX TO THE EUROPEAN SEARCH REPORT
## ON EUROPEAN PATENT APPLICATION NO.

EP 07 42 5172

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2007

| Patent document cited in search report | | Publication date | Patent family member(s) | | Publication date |
|---|---|---|---|---|---|
| EP 1621867 | A | 01-02-2006 | US | 2006158644 A1 | 20-07-2006 |
| WO 9749983 | A | 31-12-1997 | CA | 2258588 A1 | 31-12-1997 |
| WO 2004023114 | A | 18-03-2004 | AU | 2002339891 A1 | 29-03-2004 |
| | | | BR | 0211327 A | 21-12-2004 |
| | | | CN | 1659428 A | 24-08-2005 |
| | | | EP | 1535047 A1 | 01-06-2005 |
| | | | EP | 1647820 A2 | 19-04-2006 |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4953976 A
- US 5173749 A
- US 5818578 A
- WO 9715817 PCT
- US 6064488 A
- WO 9749983 PCT
- US 6344648 B
- US 6188475 B

**Non-patent literature cited in the description**

- **D.R. HERRIOTT ; H.J. SCHULTE.** Folded optical delay lines. *Appl. Opt.,* 1965, vol. 4, 883-889